# EUROPEAN PATENT SPECIFICATION

(11) **EP 2 068 644 B1**
(45) Date of publication and mention of the grant of the patent: **10.04.2013**
(21) Application number: 07842785.3
(22) Date of filing: 19.09.2007
(51) Int. Cl.: A21D 2/02, A21D 2/18, A23C 9/152, A23L 2/40, A23L 2/54, A23F 5/40, A23G 1/56

(54) **GASIFIED FOOD PRODUCTS AND METHODS OF PREPARATION THEREOF**
MIT GAS VERSETZTE LEBENSMITTELPRODUKTE UND VERFAHREN ZU IHRER HERSTELLUNG
PRODUITS ALIMENTAIRES GAZÉIFIÉS ET LEURS PROCÉDÉS DE PRÉPARATION

(30) Priority: 19.09.2006 US 845790 P
(43) Date of publication of application: 17.06.2009
(73) Proprietor: Kraft Foods Global Brands LLC, Northfield, IL 60093 (US)
(72) Inventor: ZELLER, Bary, L., Glenview, Illinois 60025 (US); KIM, Dennis, A., Palatine, Illinois 60074 (US)
(74) Representative: Murray, Adrian D'Coligny
(86) International application number: PCT/US2007/078897
(87) International publication number: WO 2008/036744

(56) References cited:
- EP-A- 0 395 145
- EP-A2- 0 229 616
- JP-A- 4 311 339
- JP-A- 62 039 602
- US-A1- 2003 026 836
- DATABASE WPI Week 198713 Derwent Publications Ltd., London, GB; AN 1987-089900 XP002464765 & JP 62 039602 A (KAO CORP) 20 February 1987 (1987-02-20) cited in the application
- DATABASE WPI Week 199737 Derwent Publications Ltd., London, GB; AN 1997-399537 XP002464766 & JP 09 176208 A (WAKO RESOURCE KK) 8 July 1997 (1997-07-08)
- "Verbindungen von Alpha-Cyclodextrin Mit Gasen" In: Cramer, F.; Henglein, F. M.: "Über Einschlussverbindungen, XII", 16 August 1957 (1957-08-16), Chemisches Institut der Universität Heidelberg vol. 90, pages 2575-2575,
- CRAMER, F. ; HENGLEIN, F. M.: "Verbindungen Von Alpha-Cyclodextrin Mit Gasen", CHEMISCHE BERICHTE, vol. 90, no. 11, 1957, pages 2572-2575,
- SAENGER, W.; STEINER, T.: "Cyclodextrin Inclusion Complexes: Host-Guest Interactions and Hydrogen-Bonding Networks", ACTA CRYSTALLOGRAPHICA SECTION A, vol. 54, 1998, pages 798-805,
- HE, Y.; FU, P.; SHEN, X.; GAO, H.: "Cyclodextrin-based aggregates and characterization by microscopy", MICRON, vol. 39, 2008, pages 495-516,
- UYAR, T. ET AL: "Reorganization and improvement of bulk polymers by processing with their cyclodextrin inclusion compounds", POLYMER, vol. 46, 2005, pages 4762-4775,
- HO, B. T.; JOYCE, D. C.; BHANDARI, B. R.: "Encapsulation of ethylene gas into alpha-cyclodextrin and characterisation of the inclusion complexes", FOOD CHEMISTRY, vol. 127, 2011, pages 572-580,
- HO, B. T.; JOYCE, D. C.; BHANDARI, B. R.: "Release kinetics of ethylene gas from ethylene-alpha-cyclodextrin inclusion complexes", FOOD CHEMISTRY, vol. 129, 2011, pages 259-266,

## Description

### Field of the Invention

The present invention relates to a solid-gas clathrate gas delivery system, and more particularly, to use of α-cyclodextrin-gas clathrates and derivatives thereof as novel food and beverage gassing compositions.

### Background of the Invention

Consumers are desirous of consuming novel confections, gourmet quality foods and beverages and spending a minimal amount of time in preparation thereof. One example of a gourmet beverage which requires a lot of time and effort to prepare is cappuccino. Cappuccino is an Italian beverage prepared with espresso and milk. Although the relative proportions can vary widely, cappuccino is typically comprised of one-third espresso, one-third steamed milk and one-third frothed milk. Preparing cappuccino traditionally requires steaming milk and creating a frothy head. A shot of espresso is then prepared and place into a cup. The steamed milk is poured in, and the frothed milk is spooned on top. The order of addition is not fixed and the steps can be interchanged. This process can take several minutes and requires special equipment.

For convenience and ease of preparation, powdered cappuccino mixes have been developed. The cappuccino powder is placed into a cup and hot water is added. Such cappuccino powdered mixtures typically contain amorphous solid particles having gas entrapped therein. When these solid particles dissolve, the gas trapped inside is released thereby providing a frothy head in minutes, if not seconds, without the need of specialized equipment.

Examples of amorphous solid particles having gas entrapped therein are shown in the following patents. U.S. Patent No. 4,289,794 discloses a gasified candy material that produces a popping sensation in the mouth when consumed. The gasified candy material is prepared by melting sugar and gasifying it at super-atmospheric pressure. The gasified sugar melt is then cooled below its fusion temperature under super-atmospheric pressure to form a gasified candy. The sugar melt is maintained at a temperature below about 107°C (about 280°F) during gasification producing in the gasified candy product observable gas bubbles wherein the majority of the observable gas bubbles have diameters greater than about 225 microns, and wherein the gasifying gas is carbon dioxide, nitrogen or air.

U.S. Patent No. 4,438,147 discloses a method of making a foaming creamer comprising the steps of (a) forming a liquid mixture comprising water and solids including a non-dairy fat, a water-soluble non-dairy carbohydrate, and dry skim milk, (b) blending an inert gas to gasify the mixture, (c) homogenizing the mixture, and (d) spray-drying the mixture by forcing the mixture through an orifice under a spray pressure sufficient to finely atomize the mixture, and contacting the atomized mixture with a gaseous drying medium at an elevated temperature, to produce a substantially dry powder devoid of an effective amount of surface tension reducing agents. The dried powder retains the ability to produce foam in a final beverage.

U.S. Patent No. 6,713,113 discloses a powdered soluble foamer ingredient for producing enhanced foam in foodstuffs and beverages. The soluble foamer ingredient comprises a matrix containing carbohydrate and protein and entrapped gas under pressure. The soluble foamer ingredient is obtained by subjecting porous particles of the matrix to an atmosphere of the gas at an increased pressure and an elevated temperature above the glass transition temperature of the particles followed by quenching or curing the particles.

U.S. Patent No. 6,953,592 discloses water soluble or water dispersible powders, tablets, or precursors therefore based on a carbohydrate matrix with improved dissolution properties in water. These components are subjected to treatment with a gas so that gas is entrapped therein, and sufficient closed porosity is provided so that gas entrapped therein promotes dissolution or dispersion upon contact with water. The powders or tablets may be pharmaceuticals or foods that optionally contain active ingredients therein.

These products, however, have a number of drawbacks. For example, the gasses trapped in the amorphous solid material may slowly escape over time. As a result, most powdered beverages containing such ingredients have limited shelf-Iffe. Another drawback is that amorphous particles containing gas or pressurized gas entrapped therein typically have a porous structure and substantial internal void volume, pore volume, or closed-pore volume producing relatively low density that may limit their use in food products and food packages. A further drawback is that amorphous particles containing gas or pressurized gas entrapped within internal voids, pores, or closed pores typically are easily deformed and densified under applied pressure, such as when compacted to form tablets, making them very susceptible to cracking, breaking, or crushing with resultant substantial or complete loss of gas or pressurized gas.

The term "clathrate" or "clathrate compound" refers to a chemical substance consisting of a lattice of one type of molecule trapping and containing a second type of molecule and is derived from the Greek word *klethra* meaning "bars." Solid-gas clathrates are crystalline solids or molecular crystals comprising one or more gas molecules of one chemical composition reversibly entrapped between and/or within one or more solid molecules of a different chemical composition. The gas molecules comprising the clathrate may be referred to as guest molecules and the solid molecules comprising the clathrate may be referred to as host molecules. Thus solid-gas clathrates can also be referred to as host-guest compounds, host-guest complexes, host-guest substances, and the like.

The gas molecules comprising the clathrate typically occupy extremely-small regularly-spaced uniformly-sized gaps or cavities between or within solid molecules in the crystal lattice. Such gaps in the crystal lattice are typically formed as a result of the inability of solid host molecules to pack closely together because of one or more limiting physical characteristic such as large molecular size or unsymmetrical shape. As such, these gaps typically have diameter and volume somewhat smaller than the diameter and volume of surrounding solid molecules. Admittance of compatible guest gas molecules into such extremely small gaps or cavities may improve the thermodynamics or kinetics governing formation, recovery, and stability of crystals. The guest gas molecules can be considered physically bound to or complexed with the solid host molecules in the crystalline solid-gas clathrate or molecular crystal.

The preparation and use of solid-gas clathrates, such as cyclodextrin-gas clathrates are known in the art. For example, U.S. Patent No. US 5,589,590 describes their use to purify and recover α-cyclodextrin from mixed cyclodextrin solutions. Japan Patent No. 62039602 discloses the production of β-cyclodextrin complexes and derivatives thereof with carbon dioxide (CO₂) and their exemplary utilization in the cosmetic field. Japan Patent No. 63148938 discloses the application of β-cyclodextrin-CO₂ complexes in food products and beverages.
Japanese Patent Application No. 09-176208 discloses a method for preparing a clathrate compound having a high degree of clathration and reduced risk of deterioration. The clathrate is prepared by bringing pressurized carbon dioxide and an unspecified cyclodextrin (or polymer thereof) into contact with each other to form an aggregate and mixing this aggregate with a guest component, preferably retinol or butyl p-hydroxybenzoate. The carbon dioxide and cyclodextrin are contacted in a vessel with an internal pressure of 5 to 15 atmospheres and a temperature of 20°C or below. The guest component is mixed with the clathrate in a cyclodextrin : guest molar ratio of 1 : 0.1 to 1 : 10 and the obtained mixture is kneaded for about 3 hours with, for example, a ball mill. The degree of clathration is 28 to 31 mol% whereas the degree of clathration is about 1 mol% when the step of contacting cyclodextrin with carbon dioxide is not performed.
Japanese Patent Application No. 04-311339 discloses a process for preparing a frothing agent for solid fat. This is achieved by clathrating an oil or fat in an unspecified cyclodextrin. This allows the frothing agent to be frothed extremely easily when the agent is used. The frothing agent is suitable for use in the preparation of a food, such as butter cake.

However, α-cyclodextrin-gas clathrates have heretofore not been successfully utilized as gassing compositions for food and beverage products.

Thus, it would be desirable to provide entrapped gas compositions for use in powdered beverages and foods which are stable and have an extended shelf life. It would also be desirable to provide entrapped gas compositions having a generally non-porous structure with relatively high density that can beneficially allow larger amounts to be used in food products and/or allow the size of food packages to be reduced. It would also be desirable to provide entrapped gas compositions that are essentially incompressible and not easily deformed or densified, making them particularly suited to use in forming tablets without substantial loss of gas. Thus, incidental cracking or breaking that might occur typically will not produce substantial loss of gas since gas entrapped therein is generally uniformity molecularly dispersed throughout the solid particulate structure and is not under pressure. The solid-gas clathrates of the present invention provide these and other benefits.

### Summary of the Invention

We have discovered that use of α-cyclodextrin-gas clathrates in food and beverage products provides several significant advantages over use of β-cyclodextrin complexes and, further, that use of nitrous oxide (N₂O) clathrates can provide a significant advantage over use of CO₂ clathrates in some food and beverage products. For example, because α-cyclodextrin has much greater water-solubility than β-cyclodextrin, higher α-cyclodextrin solution concentrations can be obtained to provide greater yields of α-cyclodextrin-gas clathrates, which beneficially increase manufacturing efficiency and reduce cost. Also, because legal regulations governing use of cyclodextrins in food and beverage products generally permit broader use of α-cyclodextrin than β-cyclodextrin, as well as generally permitting use of much higher levels of α-cyclodextrin than β-cyclodextrin, greater amounts of α-cyclodextrin-gas clathrates can be used to beneficially deliver greater amounts of gases across a broader range of food and beverage products. Finally, because N₂O gas liberated from clathrates is virtually tasteless and odorless, higher quality food and beverage products having cleaner flavor and texture can be prepared relative to the quality of products prepared using CO₂ clathrates.

**Thus, in accordance with one aspect, the present invention provides a** gasified food product comprising from 1% by weight to 50% by weight of a solid-gas clathrate selected from the group consisting of an α-cyclodextrin-gas clathrate and a derivative thereof, wherein the solid-gas clathrate has a gas content of at least 10 cc/g, and does not fully release gas unless heated to a temperature above 50°C. In accordance with another aspect, a method is provided for preparing a gasified food product comprising a solid-gas clathrate selected from the group consisting of an α-cyclodextrin-gas clathrate and a derivative thereof, the method comprising: providing a food product with from 1% by weight to 50% by weight solid-gas clathrate incorporated therein; and applying a destabilizing force to the food product to liberate gas molecules from the solid-gas clathrate in the food product, wherein the solid-gas clathrate has a gas content of at least 10 cc/g, and does not fully release gas unless heated to a temperature above 50°C.

The solid-gas clathrate is preferably selected from the group consisting of α-cyclodextrin-N₂O, α-cyclodextrin-CO₂, and derivatives thereof. In one form, the α-cyclodextrin-gas clathrate of the present invention comprises crystalline solid particles having a gas entrapped therein that can be controllably released. In another form, the solid-gas clathrate is a molecular crystal comprising individual α-cyclodextrin molecules having individual gas molecules entrapped within the internal cavity of individual α-cyclodextrin molecules that can be controllably released. Molecular crystals can be obtained by methods such as, but not limited to, dissolving crystalline solid particles of the solid-gas clathrate in water or other solvent at suitable temperature, or contacting a solution of α-cyclodextrin with a gas at suitable temperature and pressure.

The solid-gas clathrate preferably has a substantially non-porous particulate structure. The gas content of the α-cyclodextrin-gas clathrate is sufficient to provide at least 10 cubic centimeters of released gas per gram of the α-cyclodextrin-gas clathrate.

In yet another form, the gas component of the solid-gas clathrate may be selected from the group consisting of nitrous oxide (N₂O), carbon dioxide (CO₂), nitrogen (N₂), oxygen (O₂), sulfur dioxide (SO₂), hydrogen (H₂), helium (He), neon (Ne), argon (Ar), krypton (Kr), xenon (Xe), acetylene (C₂H₂), ethylene (C₂H₄), methane (CH₄), ethane (C₂H₆), propane (C₃H₈), butane (C₄H₁₀), and combinations thereof.

In yet another form, the solid-gas clathrate may be combined with a foam stabilizing ingredient. The foam stabilizing ingredient is preferably selected from the group consisting of a surfactant, a protein, a hydrolyzed protein, a proteinaceous substance, a hydrocolloid, and combinations thereof.

The gasified food product prepared according to the present invention is preferably selected from the following: a solid product, a particulate product, a liquid product, a gelled product, a beverage, a cosmetic product, a drug product, a pharmaceutical product and combinations thereof. In one form, the food product may comprise a dry mix, a liquid solution, a dough, a batter, a baked product, a ready-to-eat product, a ready-to-heat product, a liquid concentrate, a beverage, a frozen beverage, and a frozen product.

The solid-gas clathrate is present in an amount of from 1% by weight to 50% by weight of the food product. The food product preferably comprises at least one of the group consisting of foam, froth, effervescence, bubbles, overrun, leavening, rise, aerated texture, and combinations thereof.

In accordance with the method of the present invention, providing a food product with the solid-gas clathrate incorporated therein preferably comprises combining the food product with a pre-formed solid-gas clathrate and/or forming a solid-gas clathrate *in situ* in the food product. Applying a destabilizing force to the food product to liberate gas molecules from the solid-gas clathrate in the food product preferably comprises at least one of the following: reconstituting the food product in a hot liquid, heating the food product, contacting the food product with a catalyst, applying ultrasonic energy to the food product, applying an electromagnetic energy source to the food product, and combinations thereof.

### Brief Description of the Figures

FIG. 1 shows light microscopy images of α-cyclodextrin-CO₂ clathrate crystals obtained from the procedure described in Example 1 under 20X magnification in mineral oil using visible light.

FIG. 2 shows light microscopy images of α-cyclodextrin-CO₂ clathrate at 10x and 20x magnification in mineral oil using visible light (Panel A) and using polarized light (Panel B).

### Detailed Description of the Invention

The present invention provides a gasified food product comprising a solid-gas clathrate. As used herein, solid-gas clathrates are crystalline solids and/or molecular crystals comprising one or more gas molecules of one chemical composition reversibly entrapped between and/or within one or more solid molecules of a different chemical composition.

Not all gas molecules fit compatibly within gaps or cavities occurring in crystalline solids or molecular crystals, and not all types of solids can form solid-gas clathrates or molecular crystals. Accordingly, the specific chemical composition and corresponding size, shape, and polarity of gas molecules and similar characteristics of solid molecules determine whether a solid-gas clathrate can be formed and also determine the ratio of solid to gas in the clathrate. The presence of one or more gas molecules having specific chemical composition may be required for some solids to crystallize and the presence of gas molecules may alter some physical properties of the solid, such as solubility in water or other solvent, and thus may assist crystallization and recovery of solid-gas clathrates from mixtures or solutions. For example, contacting CO₂ or N₂O gas molecules with an aqueous α-cyclodextrin solution under suitable conditions of pressure and temperature can cause formation of molecular crystals in solution comprising gas molecules reversibly entrapped within the internal cavity of individual α-cyclodextrin molecules and the resulting typical reduction in solubility of the α-cyclodextrin can cause supersaturation and crystallization of α-cyclodextrin-CO₂ or α-cyclodextrin-N₂O clathrates from the solution. In addition to the presence of CO₂ or N₂O gas molecules entrapped within the internal cavity of individual α-cyclodextrin molecules comprising the crystalline solid-gas clathrate, the crystal lattice may also contain additional CO₂ or N₂O gas molecules occupying suitably-sized uniform gaps, generally having volume only slightly larger than the volume of individual gas molecules, that may occur between adjacent α-cyclodextrin-CO₂ or α-cyclodextrin-N₂O clathrate units, or groups thereof forming unit cells, comprising the crystal lattice of the solid-gas clathrate. However, either all or a majority of CO₂ or N₂O gas molecules comprising the crystalline solid-gas clathrate are entrapped within the internal cavity of α-cyclodextrin molecules therein.

The preferred solid-gas clathrates for use in the present invention are α-cyclodextrin-gas clathrates and derivatives thereof. As used herein, α-cyclodextrin-gas clathrates are crystalline solids and/or molecular crystals comprising one or more gas molecules reversibly entrapped between and/or within one or more solid molecules of α-cyclodextrin or a derivative thereof. The solid-gas clathrate preferably has a substantially non-porous particulate structure. Accordingly, the solid-gas clathrate is preferably virtually devoid or, more preferably, completely devoid of closed pores or internal voids of the type generally occurring in amorphous carbohydrate foaming compositions such as described in U.S. Patent Nos. 6,713,113 and 6,953,592, and in U.S. Patent App. Publication No. 2006/0040034. Any such occurrence of closed pores or internal voids in the solid-gas clathrate is incidental and does not significantly contribute to the entrapped gas content of these compositions.

The present invention provides a gasified food product comprising a α-cyclodextrin-gas clathrate, wherein the clathrate gas content is at least 10 cc/g. The gas content of the clathrate may be up to about 20 cc/g. The gas content of the solid-gas clathrate is expressed herein at atmospheric pressure and ambient temperature as measured by blending the clathrate with a foaming ingredient such as a protein powder and measuring the volume, density, and temperature of foam produced when dissolved in hot water.

In one form, the α-cyclodextrin-gas clathrate may include molecular crystals in which individual gas molecules are entrapped in individual α-cyclodextrin molecules. Molecular crystals may occur, for example, when, in the absence of a destabilizing force, a α-cyclodextrin-gas clathrate is dissolved in a liquid at a temperature below the decomposition temperature of the α-cyclodextrin-gas clathrate so as to disperse molecules comprising the crystalline clathrate into the liquid while retaining gas molecules within the internal cavity of the α-cyclodextrin molecules. For example, α-cyclodextrin-N₂O or α-cyclodextrin-CO₂ clathrate crystals can be dissolved in water at room temperature and the solution containing molecular crystals then heated to above the clathrate decomposition temperature and/or subjected to another destabilizing force effective to promote release of N₂O or CO₂ gas molecules from the internal cavity of the dissolved α-cyclodextrin-N₂O or α-cyclodextrin-CO₂ molecules.

Molecular crystals may also be formed *in situ* by pressurizing a food product with a gas. For example, a room-temperature food product comprising a α-cyclodextrin solution can be pressurized with N₂O effective to entrap N₂O molecules within the internal cavity of dissolved α-cyclodextrin molecules.

Crystalline α-cyclodextrin-gas clathrates typically have a characteristic well-defined stoichiometric ratio of solid to gas determined by several factors which may include chemical composition, molecular size, molecular polarity, crystal structure, crystal density, and/or method of manufacture. The α-cyclodextrin-gas clathrates of this invention may include a minor amount of unreacted, uncomplexed, or uncrystallized components that may alter the solid to gas ratio characteristic of the α-cyclodextrin-gas clathrates. Some α-cyclodextrin-gas clathrates may be unstable under ambient surface temperature and pressure, while others are stable or relatively stable under ambient conditions.

The crystalline α-cyclodextrin-gas clathrates of this invention may comprise relatively stable forms that can be combined, such as by dry blending, with a food composition and/or relatively unstable forms that can be formed *in situ,* such as by increasing the gas pressure and/or reducing the temperature of a food composition:

The solid component forming the solid-gas clathrate is preferably α-cyclodextrin or a derivative thereof, including, for example, a substituted α-cyclodextrin such as an alkylated, acylated, or glycosylated α-cyclodextrin, including, but not limited to, methyl-, ethyl-, or propyl-substituted α-cyclodextrin. The gas component forming the solid-gas clathrate is preferably selected from nitrous oxide (N₂O) and carbon dioxide (CO₂), however, other suitable gas components may include, for example, an organic or inorganic compound or chemical element selected from nitrogen (N₂), oxygen (O₂), sulfur dioxide (SO₂), hydrogen (H₂), a noble gas such as helium (He), neon (Ne), argon (Ar), krypton (Kr), or xenon (Xe), a hydrocarbon such as acetylene (C₂H₂), ethylene (C₂H₄), methane (CH₄), ethane (C₂H₆), propane (C₃H₈), butane (C₄H₁₀), and the like, or any combination thereof. Although not all of these gases may form solid-gas clathrates with α-cyclodextrin, changes in the dimensions and/or the polarity of the internal cavity of α-cyclodextrin molecules, or changes in the dimension of gaps or cavities between adjacent α-cyclodextrin molecules in the crystal lattice, resulting from α-cyclodextrin derivatization may enable clathrate formation.

In accordance with one aspect, the present invention provides gasified food products including, for example, a powdered mix, such as a coffee mix, a cocoa mix, a tea mix, a nutritional beverage mix, a topping mix, a dessert mix, a sauce mix, a soup mix, a bread mix, a cake mix, a pastry mix, a waffle mix, and/or a pizza crust mix, baked product, such as a bread, a cake, a pastry, a waffle, and/or a pizza crust, a ready-to-eat product, a ready-to-heat product, or liquid concentrate of a product, such as coffee, cocoa, tea, or nutritional beverage, refrigerated or frozen beverage, topping, dessert, sauce, or soup, ready-to-bake, refrigerated, or frozen dough or batter, ready-to-eat or ready-to-heat sauce, soup, hot cereal and the like comprising a α-cyclodextrin-gas clathrate.

The α-cyclodextrin-gas clathrate is present in an amount of from 1% by weight to 50% by weight of the food product, more preferably in an amount of from about 5% by weight to about 40% by weight of the food product, and most preferably, in an amount of from about 10% by weight to about 30% by weight of the food product. The amount and composition of the α-cyclodextrin-gas clathrate employed in a food product can be adjusted to provide a desired amount of foam, froth, effervescence, bubbles, overrun, leavening, rise, aerated texture, density, flavor, aroma, or other attribute.

The α-cyclodextrin-gas clathrates of this invention can be made using any suitable means, including, but not limited to, contacting an α-cyclodextrin solution with a gas in any manner effective to precipitate and recover clathrate crystals or contacting a food product comprising a dissolved α-cyclodextrin with a gas in any manner effective to produce a clathrate *in situ.* The concentration of dissolved α-cyclodextrin in the solution, temperature of the solution, gas pressure, and relative volume of gas to solution can be controlled to affect the rate and extent of α-cyclodextrin-gas clathrate formation and recovery. In general, increasing the pressure of a gas in contact with a solution comprising a dissolved α-cyclodextrin will increase the concentration of dissolved gas and may increase the rate and extent of α-cyclodextrin-gas clathrate formation or recovery. Other known techniques, including crystal seeding or use of nucleation methods or devices, that are commonly used to facilitate crystallization of solids may also be employed in producing α-cyclodextrin-gas clathrates of this invention.

The solubility of α-cyclodextrin in solution generally increases with increasing temperature and the amount of α-cyclodextrin-gas clathrate recovered may be increased by heating an α-cyclodextrin solution before, during, or after contacting with gas to beneficially increase the concentration of dissolved solids in solution. An α-cyclodextrin solution may optionally be cooled after contacting with gas to reduce the solubility of the α-cyclodextrin-gas clathrate in solution to increase the rate or extent of α-cyclodextrin-gas clathrate formation or recovery. Further, additional gas may be added to an α-cyclodextrin solution, such as by increasing applied gas pressure, to replace at least some of the gas in the headspace above the solution and/or dissolved in the solution to at least partially compensate for gas lost or sequestered by the α-cyclodextrin as a result of α-cyclodextrin-gas clathrate formation or crystallization.

In accordance with another aspect of the present invention, a method is provided for the preparation of a gasified food product comprising a α-cyclodextrin-gas clathrate. The α-cyclodextrin-gas clathrate may be sparingly soluble in water or other reconstituting liquid and may not rapidly or fully release gas unless heated to a temperature at or above a characteristic decomposition temperature of the α-cyclodextrin-gas clathrate. Thus, the food product comprising an α-cyclodextrin-gas clathrate may be heated to above the decomposition temperature, i.e. to above 50°C, more preferably to above about 60°C, and most preferably to above about 70°C, to promote the dissolution or decomposition of the α-cyclodextrin-gas clathrate and increase the rate or extent of gas liberated from the α-cyclodextrin-gas clathrate into or through the food product.

Suitable methods to release gas from the α-cyclodextrin-gas clathrate include, but are not limited to, directly or indirectly heating a food product comprising an α-cyclodextrin-gas clathrate using a cook top, range, oven, microwave oven, or toaster, reconstituting the food product in a suitable hot solvent (e.g., hot water, milk, or other liquid), contacting the food product with a catalyst such as a hydrolytic enzyme, or subjecting the food product to another destabilizing force such as ultrasonic energy, or an electromagnetic energy source, or reconstituting the food product in a suitable cold solvent (e.g., cold water, milk, or other liquid) and then subjecting the food product to heat, a catalyst, a destabilizing force, or combination thereof. As used herein, "hot" refers to a temperature at or above the decomposition temperature of the α-cyclodextrin-gas clathrate, and "cold" refers to a temperature below the decomposition temperature of the α-cyclodextrin-gas clathrate. As used herein, "decomposition" refers to any physical or chemical change produced in the α-cyclodextrin-gas clathrate effective to promote a partial or complete liberation of gas therefrom. For example, physical changes include, but are not limited to, thermal excitation caused by reconstituting the α-cyclodextrin-gas clathrate in a hot liquid or by heating effective to liberate gas molecules from the internal cavity of α-cyclodextrin molecules, and chemical changes include, but are not limited to subjecting the α-cyclodextrin-gas clathrate to a catalyst such as an enzyme or a strong acid effective to hydrolyze α-cyclodextrin molecules comprising the α-cyclodextrin-gas clathrate resulting in internal cavity obliteration and liberation of gas therefrom.

In another form, the α-cyclodextrin-gas clathrate may optionally be coated, encapsulated, tableted, or agglomerated using any suitable means and materials to beneficially alter its form, flavor, appearance, functionality, dissolution or dispersion characteristics, or shelf life of the food product. The α-cyclodextrin-gas clathrate is preferably combined with a foam stabilizing ingredient such as, but not limited to, a surfactant, a protein, a hydrolyzed protein, a proteinaceous substance, a hydrocolloid, or combination thereof, using any suitable means such as, but not limited to, dry blending, coating, encapsulating, tableting, or agglomerating effective to increase the amount of or prolong the duration of foam, froth, effervescence, bubbles, overrun, leavening, rise, or aerated texture of the food product. Suitable surfactants include, but are not limited to, saponins, polysorbates, sucrose esters, phospholipids, mono- or diglycerides, sodium or calcium stearoyl lactylate, propylene glycol alginate, modified starches, emulsifiers, and the like, and combinations thereof. Suitable proteins include native, fractionated, or modified proteins such as, but not limited to, those obtained from any milk, soy, egg, gelatin, wheat, vegetable, legume, grain, fruit, or other source, and combinations thereof. Suitable hydrolyzed proteins include, but are not limited to hydrolyzed milk, soy, egg, gelatin, wheat, vegetable, legume, grain, fruit, or other source, and combinations thereof. Suitable proteinaceous substances include, but are not limited to, melanoidins and peptides. Melanoidins are chemical compounds typically formed by thermal reaction of sugars or carbohydrates with proteins or amino acids, such as compounds produced by Maillard-type non-enzymic browning reactions. They are present in many roasted or toasted foods and products derived therefrom, such as soluble coffee powders. Peptides include any hydrolyzed proteins or any naturally-occurring, or edible synthetic, amino acid polymers that have molecular weight too low to be generally considered proteins. Suitable hydrocolloids include, but are not limited to, gums derived from plant sources (e.g., alginates, carrageenans, pectins, gum arabic, guar gum, and the like), gums derived from microbes (e.g., xanthan gum, and the like) and modified cellulose products (e.g., carboxymethyl cellulose, hydroxypropylcellulose, and the like), polysaccharides, and combinations thereof. The solid-gas clathrate may also be combined with a binding ingredient or filler ingredient to facilitate tableting. Suitable binding or filler ingredients include, but are not limited to, carbohydrates such as sugars, sugar alcohols, maltodextrins, starches, modified starches, microcrystalline cellulose, and the like, salts of fatty acids such as magnesium stearate, proteins such as milk powders, waxes, phospholipids such as lecithin, and combination thereof.

The following examples are intended to illustrate the invention and not to limit it. Unless noted otherwise, all percentages and ratios are by weight.

Example 1. This example illustrates the preparation of a water-soluble crystalline α-cyclodextrin-CO₂ clathrate and its use in an instant cappuccino mix to provide a significant increase in froth volume when reconstituted in hot water.

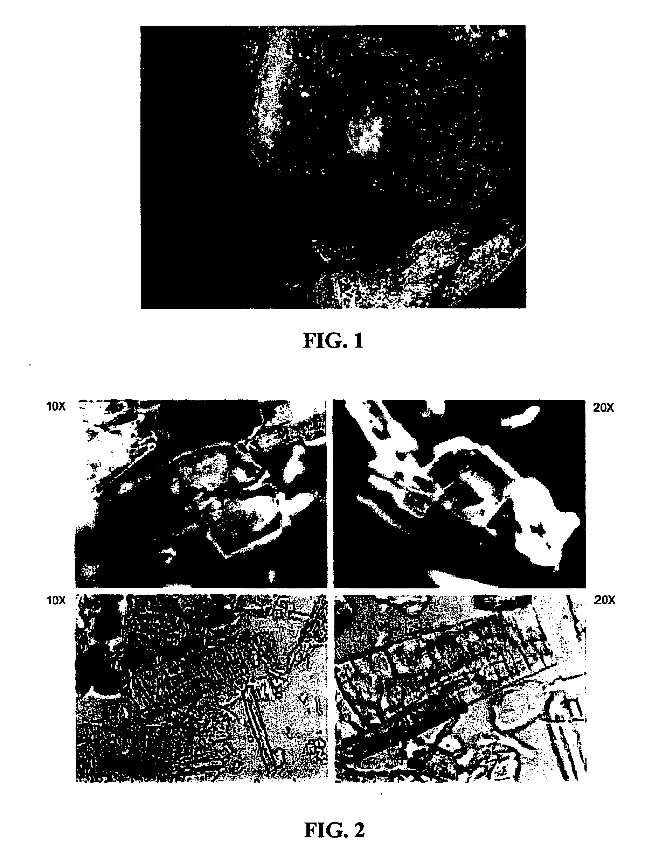

An aqueous solution was prepared by dissolving 84 g α-cyclodextrin in 700 g room temperature distilled water and the solution was then transferred to a 1.3 liter stainless steel pressure vessel. The vessel was sealed and the headspace above the solution pressurized to 3.4 MPa (500 psi) with carbon dioxide gas. After seven days at a temperature of about 25°C, the vessel was opened and a large mass of white crystals was obtained which had precipitated from the aqueous solution. The mixture was filtered through paper in a Buchner funnel and the crystals washed with several volumes of ice water to dissolve and remove residual uncomplexed α-cyclodextrin. The crystals were placed in a desiccator for one day at ambient temperature to remove surface moisture. The resulting crystals are shown in the photograph in FIG. 1.

Small amounts (1.5g and 3.0g) of the crystals were separately dry-blended with an instant cappuccino mix (11.5 g total; consisting of soluble coffee powder (2 g), sugar (4 g), milk protein-containing foaming creamer (3 g), and coffee whitener (2.5 g)), transferred to 250 mL beakers (65 mm internal diameter), and reconstituted with 150 mL hot (88°C) water. Froth heights were recorded versus a reference mix similarly prepared without added crystals. Initial froth heights (as measured along the beaker walls) were 11 mm for the reference mix (no added crystals) versus 26 mm and 36 mm, respectively, for mixes containing 1.5g and 3.0g crystals. The crystals rapidly dissolved and released gas upon reconstitution in hot water to provide the enhanced froth heights noted. A carbonation flavor and sensation was evident in both beverages when tasted, especially in the beverage froths. The same lot of crystals was stored in a sealed glass jar at room temperature (about 25 °C) and similarly assessed after two months using the same cappuccino mix ingredients and still provided comparable increases in froth height versus the same reference mix.

The gas content of the crystalline α-cyclodextrin-gas clathrate was determined by measuring the approximate volume, density, and temperature of beverage froth produced in the reconstituted cappuccino mix compared to the reference cappuccino mix. The gas content was found to be approximately 19 cc/g (corrected to room temperature and pressure); this is comparable to the gas contents of the amorphous solid foaming compositions disclosed in Examples 2 and 3 of U.S. Patent App. Publication No. 2006/0040034.

Example 2. This example illustrates compatible combinations of cyclodextrins and gases used for crystalline clathrate manufacture. Near-saturated room-temperature (about 25 °C) aqueous cyclodextrin solutions were sealed in the pressure vessel of Example 1 and the headspace over the solution pressurized to 3.4 MPa (500 psi) with selected gases. Gases separately tested included carbon dioxide (CO₂), nitrous oxide (N₂O), nitrogen (N₂), and argon (Ar). After three days at room temperature, each vessel was depressurized and opened to recover any complex that formed and precipitated from solution in the form of white crystalline clathrate. Clathrates were filtered, washed, and desiccated using the methods of Example 1. Use of incompatible combinations of cyclodextrin and gas produced no significant amount of precipitate or visible change in appearance of cyclodextrin solutions. Table 1 summarizes the experiments and results. The listed final gas pressures are approximate and were affected by partial dissolution of gas in the solutions as well as by gas sequestration in clathrates formed, including both precipitated crystalline clathrates and dissolved molecular crystals.

**TABLE 1**

| **Cyclodextrin Type / Weight (g)** | **Water Volume (mL)** | **Gas** | **Final Gas Pressure MPa (psi)** | **Crystalline Clathrate Formed** | **Yield (g)** |
|---|---|---|---|---|---|
| | | | | | |
| Alpha / 84 | 700 | CO₂ | 2.2 (325) | Yes | 42 |
| Alpha / 81 | 675 | N₂O | 1.8 (400) | Yes | 43 |
| Alpha / 84 | 700 | N₂ | 3.4 (500) | No | --- |
| Alpha / 6 | 50 | Ar | 3.4 (500) | No | --- |
| | | | | | |
| Beta / 0.6 | 60 | CO₂ | 3.1 (450) | No | --- |
| Beta / 0.5 | 50 | Ar | 3.4 (500) | No | --- |
| | | | | | |
| Gamma / 13 | 60 | CO₂ | 3.1 (450) | No | --- |
| Gamma / 10 | 50 | Ar | 3.4 (500) | No | --- |

Example 3. This example demonstrates the utility of the α-cyclodextrin-N₂O clathrate of Example 2 as a gassing agent for increasing the amount of froth in an instant hot cappuccino beverage. Replacing the α-cyclodextrin-CO₂ clathrate of Example 1 with comparable weights (i.e., 1.5g and 3.0g) of the α-cyclodextrin-N₂O clathrate in the cappuccino mix of Example 1 produced froth heights comparable to those reported in Example 1 when the mixes were similarly reconstituted. The α-cyclodextrin-N₂O clathrate crystals rapidly dissolved and released gas upon reconstitution to provide the enhanced froth heights observed. As in Example 1, milk protein present in the foaming creamer functioned as an effective foam stabilizer. Replacing the clathrate in the cappuccino mix with equal weights of uncomplexed α-cyclodextrin did not significantly increase froth volumes relative to the control mix prepared without added clathrate or cyclodextrin. The beverages formulated with the α-cyclodextrin-N₂O clathrate had excellent flavor and were beneficially devoid of the carbonation flavor and sensation produced by the α-cyclodextrin-CO₂ clathrate of Example 1.

Example 4. This example demonstrates the improved stability of the α-cyclodextrin-N₂O clathrate of Example 2 compared to a non-protein foamer produced according to the methods disclosed in U.S. Patent App. Publication No. 2006/0040034 to provide a maltodextrin-based carbohydrate powder comprised of particles having a plurality of internal voids containing entrapped pressurized nitrogen gas. Samples (2.0g) of both were separately exposed to an atmosphere of air at room temperature and 100% relative humidity for 15 hours and then separately added to identical cappuccino mixes comprised of 2g soluble coffee, 4g sugar, and 6g foaming creamer. The mixes were reconstituted according to the method of Example 1. Reference mixes were prepared and similarly evaluated using 2.0g samples of the same ingredients that were not exposed to humidified air. Both ingredients originally contained about 19 cc/g gas content (room temperature and pressure) sufficient to more than double the froth height obtained from a control cappuccino mix formulated without non-protein foamer or clathrate. Exposure of the powdered foamer to humidified air increased its moisture content by 13% by weight and produced extensive collapse and aggregation resulting in formation of a sticky solid mass. Evaluation in the cappuccino mix revealed this treatment produced a 100% loss of entrapped pressurized gas and related foamability. In contrast, exposure of the clathrate to humidified air increased its moisture content by only 5% by weight without visible change in appearance of the still free-flowing powder. Evaluation in the cappuccino mix revealed this treatment produced only about a 25% loss in gas content and related foamability. Accordingly, the clathrate would be expected to provide much greater resistance to detrimental reduction or loss of gas and foamability caused by exposure to humid air during storage and/or consumer use, especially in packaged bulk food or other consumer products that may be subjected to repeated periodic openings.

Example 5. This example demonstrates clear differences in physical properties between the α-cyclodextrin-CO₂ and α-cyclodextrin-N₂O clathrates of Example 2 and the non-protein foamer of Example 4. Particle shape, structure, cross-section, and presence of internal particle voids or particle birefringence were assessed using microscopy. Free-flow, tap, and skeletal densities, internal void volume, and gas content were determined using the same methods disclosed in U.S. Patent App. Publication No. 2006/0040034. Gas content was estimated by measuring the increase in froth height produced by addition of foamer or clathrate to the cappuccino mix of Example 1 using knowledge of beaker diameter, froth density, and temperature to obtain approximate values presented herein expressed at room temperature and pressure. Table 2 summarizes these properties and clearly distinguishes the clathrates of this invention from the non-protein and other amorphous foamers disclosed in the prior art. N/A indicates a property is either not applicable or essentially unmeasurable. The attached light microscopy images of the α-cyclodextrin-CO₂ clathrate clearly show the presence of a well-defined crystal structure and associated birefringence. The images shown in FIG. 2 were obtained at 10x and 20x magnification using visible light (Panel A) and using polarized light (Panel B).

**TABLE 2**

| **Physical Property** | **Non-Protein N₂ Foamer** | **α-Cyclodextrin-CO₂ Clathrate** | **α-Cyclodextrin-N₂O Clathrate** |
|---|---|---|---|
| | | | |
| Powder Color | Off-White | White | White |
| Particle Appearance | Opaque | Translucent | Translucent |
| General Particle Shape | Spherical | Angular | Angular |
| Particle Birefringence | Absent | Present | Present |
| Particle Structure | Amorphous | Crystalline | Crystalline |
| Particle Cross-Section | Foamed Solid | Solid | Solid |
| Free-Flow Density | 0.39 g/cc | 0.54 g/cc | 0.54 g/cc |
| Tap Density | 0.51 g/cc | 0.71 g/cc | 0.71 g/cc |
| Skeletal Density | 1.1 g/cc | 1.5 g/cc | 1.5 g/cc |
| Internal Particle Voids | Present | Absent | Absent |
| Typical Void Size | 0.5-50 microns | N/A | N/A |
| Internal Void Volume | 27% | N/A | N/A |
| Powder Gas Content | 19 cc/g | 19 cc/g | 19 cc/g |
| State of Entrapped Gas | Compressed | Complexed | Complexed |
| Mobility of Entrapped Gas | Mobile | Immobile | Immobile |
| Adjustable Gas Content | Yes | No | No |
| Cyclodextrin Cavity Size | N/A | 0.5 nanometer | 0.5 nanometer |
| Void or Cavity Size | Wide Distribution | Uniform | Uniform |

Examples 6. This example demonstrates the utility of the α-cyclodextrin-N₂O clathrate of Example 2 as a gassing agent for increasing the amount of froth in an instant hot cocoa beverage. 5g of the clathrate was added to 28g of a commercial sweetened instant cocoa mix containing whey powder and non-fat milk powder and reconstituted with 150 mL hot (88°C) water in a 250 mL beaker. The beverage produced 32 mm froth compared to 6 mm froth in a similarly reconstituted reference mix containing the same weight of uncomplexed α-cyclodextrin in place of the clathrate. The clathrate crystals rapidly dissolved and released gas upon reconstitution to provide the enhanced froth height noted. Proteins present in the whey and non-fat milk powders functioned as effective foam stabilizers. The beverage formulated with the α-cyclodextrin-N₂O clathrate had excellent flavor and appearance.

Example 7. This example demonstrates the utility of the α-cyclodextrin-N₂O clathrate of Example 2 as a gassing agent for increasing the amount of froth in an instant hot espresso beverage. When 2g α-cyclodextrin-N₂O clathrate was added to 3g soluble coffee powder containing naturally-occurring foam stabilizers (including melanoidins) and reconstituted with 100 mL hot (88°C) water in a 150 mL beaker a froth height of 18 mm was obtained. A control mix without added clathrate produced only 8 mm froth when similarly evaluated. The α-cyclodextrin-N₂O clathrate crystals rapidly dissolved and released gas upon reconstitution to provide the enhanced froth height noted. Replacing the clathrate in the cappuccino mix with an equal weight of uncomplexed α-cyclodextrin did not significantly increase froth volume relative to the control mix. The beverage formulated with the α-cyclodextrin-N₂O clathrate had desirable light-colored fine-bubbled froth and excellent flavor.

Example 8. This example demonstrates the utility of the α-cyclodextrin-N₂O clathrate of Example 2 as a dough leavening agent for increasing the amount of rise in an oven-baked pizza crust. A dough was prepared by combining approximately 100g wheat flour, 5g clathrate, and 50g water in a mixer. A reference dough was prepared by replacing the clathrate with an equal weight of uncomplexed α-cyclodextrin. The doughs were divided into 75g portions and formed into rough circles with similar thickness and diameter and baked together in a preheated 204.4°C (400°F) oven for 30 minutes. Volume analysis of the baked crusts indicated the dough formulated with clathrate increased rise by 22% relative to the reference dough formulated with uncomplexed α-cyclodextrin. The crust formulated with clathrate had well-defined internal foam structure and excellent flavor and appearance. Proteins present in the wheat flour functioned as effective foam stabilizers. The enhanced rise achieved in the clathrate-formulated dough was comparable to that obtained by normal use of baking powder and provided a pizza crust having beneficially lower sodium content.

Example 9. This example demonstrates the utility of the α-cyclodextrin-N₂O clathrate of Example 2 as a gassing agent for increasing the amount of froth in hot coffee beverages prepared from liquid concentrates. A liquid espresso concentrate was prepared by dissolving 4g soluble coffee powder containing naturally-occurring foam stabilizing ingredients (including melanoidins) and 2g α-cyclodextrin-N₂O clathrate of Example 2 in 6g room temperature water in a 250 mL beaker. It appeared most of the clathrate did not dissolve and formed a sediment layer on the bottom of the beaker. After about one minute, 94 mL hot (88°C) water was added to the beaker to dissolve the clathrate and reconstitute the espresso concentrate to a strength appropriate for consumption. A small-bubbled continuous froth layer having a height of about 14 mm was obtained on top of a beverage having 30 mm height. A reference product that was similarly formulated and prepared, but which substituted 2g uncomplexed α-cyclodextrin for α-cyclodextrin-N₂O clathrate, produced a large-bubbled froth layer having a height of about 6mm (as measured against the beaker wall) which did not completely cover the surface of beverage having 32 mm beverage. A liquid cappuccino concentrate was prepared by dissolving 2g of the same soluble coffee powder, 3g α-cyclodextrin-N₂O clathrate of Example 2, and 6g spray-dried skim milk powder in 18g room temperature water in a 250 mL beaker. It appeared most of the clathrate did not dissolve and formed a sediment layer on the bottom of the beaker. After about one minute, 132 mL hot (88°C) water was added to the beaker to dissolve the clathrate and reconstitute the cappuccino concentrate to a strength appropriate for consumption. A small-bubbled continuous froth layer having a height of about 10 mm was obtained on top of a beverage having 49 mm height. A reference product that was similarly formulated and prepared, but which substituted 3g uncomplexed α-cyclodextrin for α-cyclodextrin-N₂O clathrate, produced a medium/large-bubbled froth layer having a height of about 5mm (as measured against the beaker wall) which did not completely cover the surface of the beverage having 51 mm height. During the preparation of both the espresso and cappuccino gasified beverage products, it appeared little or no gas was released, as visible bubbles or froth, from the α-cyclodextrin-N₂O clathrate until hot water was added to reconstitute the liquid beverage concentrates. Use of α-cyclodextrin-N₂O clathrate in place of equal weights of uncomplexed α-cyclodextrin at least doubled the height and volume of froth produced in the gasified espresso and cappuccino beverage products relative to their corresponding reference products. The gasified espresso and cappuccino beverage products formulated with the α-cyclodextrin-N₂O clathrate had excellent flavor and appearance.

## Claims

1. A gasified food product comprising from 1% by weight to 50% by weight of a solid-gas clathrate selected from the group consisting of an α-cyclodextrin-gas clathrate and a derivative thereof, wherein the solid-gas clathrate has a gas content of at least 10 cc/g, and does not fully release gas unless heated to a temperature above 50°C.

2. A method for preparing a gasified food product comprising a solid-gas clathrate selected from the group consisting of α-cyclodextrin-gas clathrate and a derivative thereof, the method comprising:
providing a food product with from 1% by weight to 50% by weight solid-gas clathrate incorporated therein; and
applying a destabilizing force and a temperature above 50°C to the food product to liberate gas molecules from the solid-gas clathrate in the food product, wherein the solid-gas clathrate has a gas content of at least 10 cc/g.

3. The gasified food product of Claim 1 or the method of Claim 2, wherein the solid-gas clathrate is selected from the group consisting of α-cyclodextrin-N₂O, α-cyclodextrin-CO₂, and derivatives thereof.

4. The gasified food product of Claim 1 or the method of Claim 2, wherein the solid-gas clathrate is a crystalline solid-gas clathrate.

5. The gasified food product of Claim 1 or the method of Claim 2, wherein the solid-gas clathrate is a molecular crystal solid-gas clathrate.

6. The gasified food product of Claim 1 or the method of Claim2, wherein the solid-gas clathrate is a substantially non-porous particulate structure.

7. The gasified food product of Claim 1 or the method of Claim 2, wherein the gas is selected from the group consisting of nitrous oxide (N₂O), carbon dioxide (CO₂), nitrogen (N₂), oxygen (O₂), sulfur dioxide (SO₂), hydrogen (H₂), helium (He), neon (Ne), argon (Ar), krypton (Kr), xenon (Xe), acetylene (C₂H₂), ethylene (C₂H₄), methane (CH₄), ethane (C₂H₆), propane (C₃H₈), butane (C₄H₁₀), and combinations thereof.

8. The gasified food product of Claim 1 or the method of Claim 2, wherein the solid-gas clathrate is combined with a foam stabilizing ingredient.

9. The gasified food product or the method of Claim 8, wherein the foam stabilizing ingredient is selected from the group consisting of a surfactant, a protein, a hydrolyzed protein, a proteinaceous substance, a hydrocolloid, and combinations thereof.

10. The gasified food product of Claim 1, wherein the food product is selected from the group consisting of a solid product, a particulate product, a liquid product, a gelled product, a beverage product, a drug product, a pharmaceutical product, and combinations thereof.

11. The gasified food product of Claim 1, wherein the food product is selected from the group consisting of a dry mix, a liquid solution, a dough, a batter, a baked product, a ready-to-eat product, a ready-to-heat product, a liquid concentrate, a beverage, a frozen beverage, and a frozen product.

12. The gasified food product of Claim 1, wherein the food product comprises at least one of the group consisting of foam, froth, effervescence, bubbles, overrun, leavening, rise, aerated texture, and combinations thereof.

13. The method of Claim 2, wherein providing a food product with the solid-gas clathrate incorporated therein comprises at least one of the group consisting of combining the food product with a pre-formed solid-gas clathrate and forming a solid-gas clathrate in situ in the food product.

14. The method of Claim 2, wherein applying a destabilizing force to the food product to liberate gas molecules from the solid-gas clathrate in the food product comprises at least one of the group consisting of reconstituting the food product in a hot liquid, heating the food product, contacting the food product with a catalyst, applying ultrasonic energy to the food product, applying an electromagnetic energy source to the food product, and combinations thereof.

## Patentansprüche

1. Mit Gas versetztes Lebensmittelprodukt, umfassend von 1 Gew.-% bis 50 Ges.-% eines Feststoff-Gas Clathrats, ausgewählt aus der Gruppe bestehend aus einem α-Cyclodextrin-Gas Clathrat und einem Derivat davon, wobei das Feststoff-Gas Clathrat einen Gasgehalt von mindestens 10 cc/g aufweist und das Gas nicht vollständig freisetzt, bis es auf eine Temperatur von über 50°C erhitzt wird.

2. Verfahren zur Herstellung eines mit Gas versetzten Lebensmittelprodukts, umfassend ein Feststoff-Gas Clathrat, ausgewählt aus der Gruppe bestehend aus einem α-Cyclodextrin-Gas Clathrat und einem Derivat davon, das Verfahren umfassend:
Bereitstellen eines Lebensmittelprodukts mit darin enthaltenen von 1 Gew.-% bis 50 Gew.-% Feststoff-Gas Clathrat; und
Aufbringen einer destabilisierenden Kraft und einer Temperatur von über 50°C auf das Lebensmittelprodukt, um Gasmoleküle von dem Feststoff-Gas Clathrat in das Lebensmittelprodukt freizusetzen, wobei das Feststoff-Gas Clathrat einen Gasgehalt von mindestens 10 cc/g aufweist.

3. Mit Gas versetztes Lebensmittelprodukt nach Anspruch 1 oder das Verfahren nach Anspruch 2, wobei das Feststoff-Gas Clathrat ausgewählt ist aus der Gruppe bestehend aus einem α-Cyclodextrin-N₂O, α-Cyclodextrin-CO₂ und Derivaten davon.

4. Mit Gas versetztes Lebensmittelprodukt nach Anspruch 1 oder das Verfahren nach Anspruch 2, wobei das Feststoff-Gas Clathrat ein kristallförmiges Feststoff-Gas Clathrat ist.

5. Mit Gas versetztes Lebensmittelprodukt nach Anspruch 1 oder das Verfahren nach Anspruch 2, wobei das Feststoff-Gas Clathrat ein Molekülkristall Feststoff-Gas Clathrat ist.

6. Mit Gas versetztes Lebensmittelprodukt nach Anspruch 1 oder das Verfahren nach Anspruch 2, wobei das Feststoff-Gas Clathrat eine im Wesentlichen nicht-poröse partikuläre Struktur ist.

7. Mit Gas versetztes Lebensmittelprodukt nach Anspruch 1 oder das Verfahren nach Anspruch 2, wobei das Gas ausgewählt ist aus der Gruppe bestehend aus Distickstoffmonoxid (N₂O), Kohlendioxid (CO₂), Stickstoff (N₂), Sauerstoff (O₂), Schwefeldioxid (SO₂), Wasserstoff (H₂), Helium (He), Neon (Ne), Argon (Ar), Krypton (Kr), Xenon (Xe), Acetylen (C₂H₂), Ethylen (C₂H₄), Methan (CH₄), Ethan (C₂H₆), Propan (C₃H₈), Butan (C₄H₁₀) und Kombinationen davon.

8. Mit Gas versetztes Lebensmittelprodukt nach Anspruch 1 oder das Verfahren nach Anspruch 2, wobei das Feststoff-Gas Clathrat mit einem schaumstabilisierenden Bestandteil kombiniert ist.

9. Mit Gas versetztes Lebensmittelprodukt oder das Verfahren nach Anspruch 8, wobei der schaumstabilisierende Bestandteil ausgewählt ist aus der Gruppe bestehend aus einem Tensid, einem Protein, einem hydrolisierten Protein, einer proteinartigen Substanz, einem Hydrokolloid und Kombinationen davon.

10. Mit Gas versetztes Lebensmittelprodukt nach Anspruch 1, wobei das Lebensmittelprodukt ausgewählt ist aus der Gruppe bestehend aus einem festen Produkt, einem partikelförmigen Produkt, einem flüssigen Produkt, einem gelierten Produkt, einem Getränkeprodukt, einem Arzneimittel, einem pharmazeutischen Produkt und Kombinationen davon.

11. Mit Gas versetztes Lebensmittelprodukt nach Anspruch 1, wobei das Lebensmittelprodukt ausgewählt ist aus der Gruppe bestehend aus einem Trockengemisch, einer Flüssigmischung, einem Teig, einem Backteig, einem Backprodukt, einem verzehrfertigen Produkt, einem Aufwärmfertigenprodukt, einem Flüssigkonzentrat, einem Getränk, einem Gefriergetränk und einem Gefrierprodukt

12. Mit Gas versetztes Lebensmittelprodukt nach Anspruch 1, wobei das Lebensmittelprodukt mindestens eines aus der Gruppe umfasst, bestehend aus Schaum, Schlagschaum, Aufschäumen, Bläschen, Ausschlag, Auflockerung, Hochtreiben, mit Luft durchsetzter Textur und Kombinationen davon.

13. Verfahren nach Anspruch 2, wobei Bereitstellen eines Lebensmittelprodukts mit darin enthaltenem Feststoff-Gas Clathrat mindestens eines aus der Gruppe umfasst, bestehend aus Verbinden des Lebensmittelprodukts mit einem vorgefertigten Feststoff-Gas Clathrat und Bilden eines Feststoff-Gas Clathrats *in situ* in dem Lebensmittelprodukt.

14. Verfahren nach Anspruch 2, wobei Aufbringen einer destabilisierenden Kraft auf das Lebensmittelprodukt, um Gasmoleküle aus dem Feststoff-Gas Clathrat in das Lebensmittelprodukt freizusetzen, mindestens eines aus der Gruppe umfasst, bestehend aus Wiederherstellen des Lebensmittelprodukts in einer heißen Flüssigkeit, Erhitzen des Lebensmittelprodukts, Inkontaktbringen des Lebensmittelprodukts mit einem Katalysator, Aufbringen von Ultraschallenergie auf das Lebensmittelprodukt, Aufbringen einer elektromagnetischen Energiequelle auf das Lebensmittelprodukt und Kombinationen davon.

## Revendications

1. Produit alimentaire gazéifié comprenant de 1 % en poids à 50 % en poids d'un clathrate solide-gaz choisi dans le groupe constitué d'un clathrate d'α-cyclodextrine-gaz et d'un dérivé de celui-ci, le clathrate solide-gaz ayant une teneur en gaz d'au moins 10 cm³/g et ne libérant pas complètement le gaz jusqu'à ce qu'il soit chauffé à une température supérieure à 50° C.

2. Procédé de préparation d'un produit alimentaire gazéifié comprenant un clathrate solide-gaz choisi dans le groupe constitué d'un clathrate d'α-cyclodextrine-gaz et d'un dérivé de celui-ci, le procédé comprenant :
la fourniture d'un produit alimentaire présentant de 1 % en poids à 50 % en poids de clathrate solide-gaz incorporé dans celui-ci ; et
l'application d'une force déstabilisante et d'une température supérieure à 50° C au produit alimentaire pour libérer des molécules de gaz du clathrate solide-gaz dans le produit alimentaire, le clathrate solide-gaz ayant une teneur en gaz d'au moins 10 cm³/g_{.}

3. Produit alimentaire gazéifié selon la revendication 1 ou procédé selon la revendication 2, dans lequel le clathrate solide-gaz est choisi dans le groupe constitué de l'α-cyclodextrine-N₂O, de l'α-cyclodextrine-CO₂ et des dérivés de ceux-ci.

4. Produit alimentaire gazéifié selon la revendication 1 ou procédé selon la revendication 2, dans lequel le clathrate solide-gaz est un clathrate solide-gaz cristallin.

5. Produit alimentaire gazéifié selon la revendication 1 ou procédé selon la revendication 2, dans lequel le clathrate solide-gaz est un clathrate solide-gaz cristallin moléculaire.

6. Produit alimentaire gazéifié selon la revendication 1 ou procédé selon la revendication 2, dans lequel le clathrate solide-gaz est une structure particulaire substantiellement non poreuse.

7. Produit alimentaire gazéifié selon la revendication 1 ou procédé selon la revendication 2, dans lequel le gaz est choisi dans le groupe constitué de l'oxyde nitreux (N₂O), du dioxyde de carbone (CO₂), de l'azote (N₂), de l'oxygène (O₂), du dioxyde de soufre (SO₂), de l'hydrogène (H₂), de l'hélium (He), du néon (Ne), de l'argon (Ar), du krypton (Kr), du xénon (Xe), de l'acétylène (C₂H₂), de l'éthylène (C₂H₄), du méthane (CH₄), de l'éthane (C₂H₆), du propane (C₃H₈), du butane (C₄H₁₀) et des combinaisons de ceux-ci.

8. Produit alimentaire gazéifié selon la revendication 1 ou procédé selon la revendication 2, dans lequel le clathrate solide-gaz est combiné à un ingrédient de stabilisation de mousse.

9. Produit alimentaire gazéifié ou procédé selon la revendication 8, dans lequel l'ingrédient de stabilisation de mousse est choisi dans le groupe constitué d'un tensioactif, d'une protéine, d'une protéine hydrolysée, d'une substance protéique, d'un hydrocolloïde et des combinaisons de ceux-ci.

10. Produit alimentaire gazéifié selon la revendication 1, dans lequel le produit alimentaire est choisi dans le groupe constitué d'un produit solide, d'un produit particulaire, d'un produit liquide, d'un produit gélifié, d'un produit pour boisson, d'un produit médicamenteux, d'un produit pharmaceutique et de la combinaison de ceux-ci.

11. Produit alimentaire gazéifié selon la revendication 1, le produit alimentaire étant choisi dans le groupe constitué d'un mélange sec, d'une solution liquide, d'une pâte, d'une pâte à frire, d'un produit cuit, d'un produit prêt à consommer, d'un produit prêt à chauffer, d'un concentré liquide, d'une boisson, d'une boisson congelée et d'un produit congelé.

12. Produit alimentaire gazéifié selon la revendication 1, le produit alimentaire comprenant au moins un élément du groupe constitué d'une mousse, d'un composant mousseux, d'une effervescence, de bulles, d'un agent de débordement, de levage, de soulèvement, d'une texture aérée et de combinaisons de ceux-ci.

13. Procédé selon la revendication 2, dans lequel la fourniture d'un produit alimentaire avec le clathrate solide-gaz incorporé dans celui-ci comprend au moins un composant du groupe constitué de la combinaison du produit alimentaire avec un clathrate solide-gaz préformé et de la formation d'un clathrate solide-gaz *in situ* dans le produit alimentaire.

14. Procédé selon la revendication 2, dans lequel l'application d'une force déstabilisante au produit alimentaire pour libérer des molécules de gaz du clathrate solide-gaz dans le produit alimentaire comprend au moins un élément du groupe constitué de la reconstitution du produit alimentaire dans un liquide chaud, du chauffage du produit alimentaire, de la mise en contact du produit alimentaire avec un catalyseur, de l'application d'une énergie ultrasonore au produit alimentaire, de l'application d'une source d'énergie électromagnétique au produit alimentaire et des combinaisons de ceux-ci.
